# EUROPÄISCHE PATENTSCHRIFT

(11) **EP 2 256 125 B1**
(45) Veröffentlichungstag und Bekanntmachung des Hinweises auf die Patenterteilung: **30.04.2014**
(21) Anmeldenummer: 10009384.8
(22) Anmeldetag: 14.08.2003
(51) Int. Cl.: C07F 15/00

(54) **Rhodium- und Iridium-Komplexe**
Rhodium and iridium complexes
Complexes de rhodium et d'iridium

(30) Priorität: 24.08.2002 DE 10238903
(43) Veröffentlichungstag der Anmeldung: 01.12.2010
(62) Teilanmeldung aus: 03753356.9
(73) Patentinhaber: Merck Patent GmbH, 64293 Darmstadt (DE)
(72) Erfinder: Stoessel, Philipp, Dr., 60487 Frankfurt am Main (DE); Bach, Ingrid, Dr., 51469 Bergisch-Gladbach (DE); Spreitzer, Hubert, Dr., 68519 Viernheim (DE)

(56) Entgegenhaltungen:
- EP-A- 1 348 711
- WO-A-02/066552
- WO-A-03/079736
- LO S-C ET AL: "GREEN PHOSPHORESCENT DENDRIMER FOR LIGHT-EMITTING DIODES", ADVANCED MATERIALS, VCH VERLAGSGESELLSCHAFT, WEINHEIM, DE, Bd. 14, Nr. 13/14, 4. Juli 2002 (2002-07-04), Seiten 975-979, XP001130567, ISSN: 0935-9648
- MARKHAM J P J ET AL: "HIGH-EFFICIENCY GREEN PHOSPHORESCENCE FROM SPIN-COATED SINGLE-LAYER DENDRIMER LIGHT-EMITTING DIODES", APPLIED PHYSICS LETTERS, AMERICAN INSTITUTE OF PHYSICS. NEW YORK, US, Bd. 15, Nr. 80, 15. April 2002 (2002-04-15), Seiten 2645-2647, XP001074763, ISSN: 0003-6951

## Beschreibung

Metallorganische Verbindungen - speziell Verbindungen der d⁸-Metallewerden in naher Zukunft als Wirkkomponenten (= Funktionsmaterialien) in einer Reihe von verschiedenartigen Anwendungen, die im weitesten Sinne der Elektronikindustrie zugerechnet werden können, Einsatz als funktionelle Komponenten finden.

Bei den auf organischen Komponenten basierenden Organischen-Elektrolumineszenz-Vorrichtungen (allg. Beschreibung des Aufbaus vgl. US-A-4,539,507 und US-A-5,151,629) bzw. deren Einzelbauteilen, den Organischen-Lichtemittierenden-Dioden (OLEDs) ist die Markteinführung bereits erfolgt, wie die erhältlichen Auto-Radios mit "Organischem Display" der Firma Pioneer belegen. Weitere derartige Produkte stehen kurz vor der Einführung. Trotz allem sind hier noch deutliche Verbesserungen nötig, um diese Displays zu einer echten Konkurrenz zu den derzeit marktbeherrschenden Flüssigkristallanzeigen (LCD) zu machen bzw. diese zu überflügeln.

Eine Entwicklung hierzu, die sich seit einigen Jahren abzeichnet, ist der Einsatz von metallorganischen Komplexen, die Phosphoreszenz statt Fluoreszenz zeigen [M. A. Baldo, S. Lamansky, P. E. Burrows, M. E. Thompson, S. R. Forrest, Applied Physics Letters, 1999, 75, 4-6].

Aus theoretischen Spin-statistischen Gründen ist unter Verwendung metallorganischer Verbindungen als Phosphoreszenz-Emittern eine bis zu vierfache Energie- und Leistungseffizienz möglich. Ob sich diese neue Entwicklung durchsetzen wird, hängt stark davon ab, ob entsprechende Device-Kompositionen gefunden werden können, die diese Vorteile (Triplett-Emission = Phosphoreszenz gegenüber Singulett-Emission = Fluoreszenz) auch in den OLEDs umsetzen können. Als wesentliche Bedingungen für praktische Anwendung sind hier insbesondere eine hohe operative Lebensdauer, eine hohe Stabilität gegenüber Temperaturbelastung und eine niedrige Einsatz- und Betriebsspannung, um mobile Applikationen zu ermöglichen, zu nennen.
Daneben muß der effiziente chemische Zugang zu den entsprechenden Organo-Metall-Verbindungen gegeben sein. Von besonderem Interesse sind dabei Organo-Rhodium- und Iridium-Verbindungen. Bei diesen ist vor allem unter Berücksichtigung des Rhodium- bzw. des Iridiumpreises von maßgebender Bedeutung, daß ein effizienter Zugang zu entsprechenden Derivaten ermöglicht wird.

Ein Schwachpunkt der bisher beschriebenen Phosphoreszenz-Emitter stellt deren schlechte Löslichkeit dar. So sind gerade in letzter Zeit häufig sogenannte Hybrid-Device-Strukturen erwogen worden, die die Vorteile der "small-molecule"-OLEDs mit denen der Polymer-OLEDs (PLEDs) verbinden. Dabei ist es besonders wichtig, die Verbindungen aus Lösung aufzubringen. Hierzu sind bereits mehrere Möglichkeiten beschrieben worden: (a) Aufbringen von puren Schichten von "small-molecules" bzw. Triplett-Emittern, bzw. (b) Aufbringen von Blends (= Mischungen) dieser in polymeren bzw. niedermolekularen Matrizes.
Erhoffte Vorteile dieser Hybrid-Strukturen sind nun unter anderem folgende:
- Das Aufbringen aus Lösung (v. a. mit Hilfe von hochaufgelösten Druckverfahren) dürfte langfristig deutliche Vorteile gegenüber dem heute gängigen Vakuum-Verdampfungsprozeß aufweisen, v. a. hinsichtlich Skalierbarkeit, Strukturierbarkeit, Beschichtungseffizienz und Ökonomie.
- Da derzeit noch keine polymeren Triplett-Emitter bekannt sind, können durch die Verwendung der Hybridstruktur die vorteilhaften Device-Eigenschaften der niedermolekularen Triplett-Emitter mit den vorteilhaften Aufbringungsmethoden der Polymere verknüpft werden.

Typische Phosphoreszenz-Emitter, wie sie bis dato berichtet wurden, sind metallorganische Komplexe, v. a. des Iridiums. Hier wird v. a. über Tris-(phenyl-pyridyl)-komplexe und Derivate berichtet.
Allerdings sind bisher nur - mit einer Ausnahme - Verbindungen beschrieben, die entweder Phenylpyridin direkt, oder mit Fluor, Methoxy oder ähnlichen Gruppen substituiertes Phenylpyridin, oder benzoanelliertes Phenylpyridin, als Liganden enthalten. Diese Komplexe weisen i. d. R. in gängigen Lösemitteln eine geringe Löslichkeit auf (z. B. < 2 g/L, häufig deutlich kleiner 1 g/L; siehe auch Angaben inden Beispielen).
Einzig P. L. Burn et al. beschreiben ein dendrimer-artiges Derivat (Adv. Mater. 2002, 14, 975; Appl. Phys. Lett. 2002, 80, 2645), welches höhere Löslichkeiten aufzuweisen scheint. Allerdings ist in den bisher dazu erschienen Publikationen nicht aufgezeigt, wie diese Verbindung überhaupt zugänglich ist.

Aus WO 2002/044189 sind heteroleptische Komplexe bekannt (z. B. Verbindung 37 in Tabelle 3), welche einen Liganden enthält, der über eine Thiophengruppe und eine Isochinolingruppe an das Iridium koordiniert. Verbindungen, in denen die Thiophengruppe durch eine Aryl- oder Heteroarylgruppe substituiert ist, sind nicht offenbart.

Aus dem oben gesagten, ergeben sich zwei wichtige Aufgaben für den weiteren Fortschritt auf dem Gebiet der phosphoreszenten OLEDs:
1. Es besteht ein großer Bedarf an gut löslichen Triplettemittern.
2. Diese müssen synthetisch gut zugänglich sein, da - wie oben bereits erwähnt - der Preis für die "Rohstoffe" bereits enorm hoch ist.

Gegenstand der vorliegenden Erfindung sind deshalb 5'-Mono- und 5',5"-Bisaryl/heteroaryl-funktionalisierte tris-orthometallierte Organo-Rhodium- und Organo-Iridium-Verbindungen, gemäß Verbindungen (IIa). Über eine entsprechende Aryl/heteroaryl-Substitution können entscheidende Materialeigenschaften, wie u. a. die Wellenlänge der Phosphoreszenzemission d. h. die Farbe, die Phosphoreszenzquantenausbeute und die Redox- und Temperaturstabilität der Emitter, eingestellt werden.
Besonders wichtig, gerade im Zusammenhang mit dem o. g., ist dabei auch, daß gerade mit der hier vorliegenden Substitution, die Löslichkeit sehr stark verbessert werden kann (s. v. a. auch die Angaben im Experimentellen Teil). Dies ist v. a. für eine Verwendung mit der o. g. Hybridtechnik von entscheidender Bedeutung.

Die Klasse der 5'-Mono- und 5',5"-Bis-aryl/heteroaryl-funktionalisierten trisorthometallierten Organo-Rhodium- und Organo-Iridium-Verbindungen - gemäß Verbindungen (IIa)- ist neu und bisher in der Literatur nicht beschrieben worden, ihre effiziente Darstellung und Verfügbarkeit als Reinstoffe ist aber für eine Reihe von elektro-optischen Anwendungen von großer Bedeutung.

Wie oben berichtet, ist über die Synthese derartiger Verbindungen noch nicht berichtet worden, wodurch es selbst für den Fachmann schwer ist, die o. g. Resultate von Paul Burn et al. nachzuvollziehen.

Wie oben geschildert, sind die erfindungsgemäßen Verbindungen nicht vorbeschrieben und damit neu.

Diese erfindungsgemäßen Verbindungen weisen nun folgende Vorteile auf:
- Durch geeignete Substitution ist eine große Bandbreite von Emissionsfarben und Lagen der Energieniveaus einstellbar. Hierbei ist besonders darauf zu verweisen, daß gerade durch die große Variabilität von Aryl- und Heteroarylgruppen hier die Eigenschaften in einem sehr großen Bereich verschoben werden können.
- Durch entsprechende Seitenketten an den Aryl- oder Heteroarylresten bzw. durch diese selbst bereits (vgl. auch Daten im Experimentellen Teil), läßt sich die Löslichkeit der erzeugten Komplexe sehr weit erhöhen bzw. einstellen, ohne die sonstigen Eigenschaften negativ zu beeinflußen. Dies ist besonders deshalb bedeutend, da eine direkte Substitution an den direkt komplexierenden Kernen, häufig die Eigenschaften verändert, bzw. die synthetische Zugänglichkeit erschwert.

Gegenstand der vorliegenden Erfindung sind somit die Verbindungen gemäß Formel (IIa) (Schema 2), 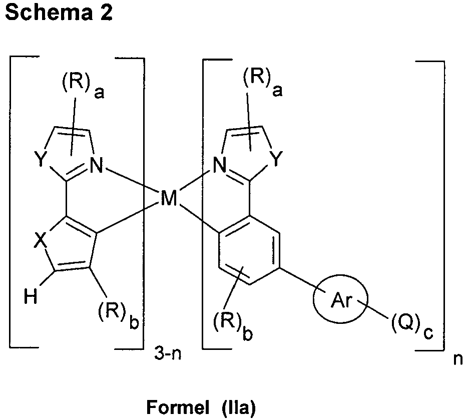 wobei die Symbole und Indizes folgende Bedeutung haben:
- M: Rh, Ir;
- X: O, S, Se;
- Y: S, O, R-C=C-R, R-C=N;
- R: ist gleich oder verschieden bei jedem Auftreten H, F, Cl, NO₂, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -S-, -NR¹-, oder -CONR² - ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann; wobei mehrere Substituenten R, sowohl am selben Ring als auch an den beiden unterschiedlichen Ringen zusammen wiederum ein weiteres mono- oder polycyclisches Ringsystem aufspannen können;
- Ar: eine Arylgruppe mit bis zu 40 C-Atomen oder eine Heteroarylgruppe mit 1 bis 40 C-Atomen;
- Q: ist, gleich oder verschieden bei jedem Auftreten und steht für F, Cl, Br, I, CN, COOH, NH₂, OH, SH, NO₂, SO₃H, SiR₃ oder eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -S-, -CO-, -COO-, -O-CO-, -NR¹-, -(NR²R³)⁺A⁻, oder -CONR⁴-ersetzt sein können und wobei ein oder mehrere H-Atome durch F ersetzt sein können, oder eine Aryl- oder Heteroarylgruppe mit 4 bis 14 C-Atome, die durch einen oder mehrere, nicht aromatische Reste R substituiert sein kann;
- A⁻: ein einfach geladenes Anion oder dessen Äquivalent;
- R¹, R², R³, R⁴: sind gleich oder verschieden, H oder ein aliphatischer oder aromatischer Kohlenwasserstoffrest mit 1 bis 20 C-Atomen;
- a: ist 0, 1 oder 2,
- b: ist 0, 1, 2 oder 3, bevorzugt 0 oder 1;
- c: ist 0 bis 15, bevorzugt 0, 1, 2, 3, 4 oder 5, besonders bevorzugt 0, 1 oder 2;
- n: ist 1 oder 2.

Bevorzugt sind erfindungsgemäße Verbindungen (IIa), bei denen das Symbol Y = O, S bedeutet.

Ebenfalls bevorzugt sind erfindungsgemäße Verbindungen (IIa), bei denen Y = R-C=C-R, R-C=N- ist.

Ebenfalls bevorzugt sind erfindungsgemäße Verbindungen (IIa), bei denen b = 0 ist.

Ebenfalls bevorzugt sind erfindungsgemäße Verbindungen (IIa), bei denen Ar = eine Arylgruppe bzw. Ar = eine Heteroarylgruppe ist.

Ebenfalls bevorzugt sind erfindungsgemäße Verbindungen (IIa), bei denen der Rest Ar für Benzol, Toluol, Xylol, Fluorbenzol, Difluorbenzol, Biphenyl, 1,2- bzw. 1,3- bzw. 1,4-Terphenylen, Tetraphenylen, Naphthalin, Fluoren, Phenanthren, Anthracen, 1,3,5-Triphenylbenzol, Pyren, Perylen, Chrysen, Triptycen, [2.2]Paracyclophan, Pyridin, Pyridazin, 4,5-Benzo-pyridazin, Pyrimidin, Pyrazin, 1,3,5-Triazin, Pyrrol, Indol, 1,2,5- bzw. 1,3,4-Oxadiazol, 2,2'- bzw. 4,4'-Diazabiphenyl, Chinolin, Carbazol, 5,10H-Dihydro-phenazin, 10H-Phenoxazin, Phenothiazin, Xanthen, 9-Acridin, Furan, Benzofuran, Thiophen oder Benzothiophen steht.

Besonders bevorzugt sind erfindungsgemäße Verbindungen (IIa), bei denen Ar für Carbazol, N-Alkylcarbazol, N-Alkyl-phenoxazine, Phenothiazin und/oder Xanthen, insbesondere für Phenyl, 1- bzw. 2-Naphthyl, 1-, 2- bzw. 9-Anthracenyl, steht.

Bevorzugt sind weiterhin unsymmetrisch substituierte Arylreste Ar. Unsymmetrisch bedeutet hier, daß die Aryl-Fragmente inklusive der Substituenten keine C₂-Symmetrie-Achse aufweisen, die durch die mit dem Metallkomplex verbindende Bindung geht. Grund für diese Bevorzugung ist, daß dadurch die Löslichkeit weiter erhöht werden kann.

Ebenfalls bevorzugt sind erfindungsgemäße Verbindungen (IIa), bei denen der Rest Q für F, Cl, Br, CN, NO₂ SiR₃ oder eine geradkettige oder verzweigte oder cyclische Alkyl- oder Alkoxygruppe mit 1 bis 6 C-Atomen, wobei eine oder mehrere benachbarte CH₂-Guppe durch -CF₂- ersetzt sein kann, steht.

Des weiteren ist es auch möglich, daß einzelne Reste Q Gruppen tragen bzw. darstellen, welche z. B. photochemisch vernetzbar sind. Derartige Gruppen sind beispielsweise in der Anmeldeschrift WO 02/10129 offenbart.
Verwendung können solche Substituenten finden, wenn die entsprechenden Komplexe als Reinschicht aufgebracht werden und durch nachträgliches Vernetzen für weitere Verarbeitungsschritte vorbereitet werden sollen.

Ebenfalls bevorzugt sind erfindungsgemäße Verbindungen (IIa), bei denen für M = Ir steht.

Ebenfalls bevorzugt sind erfindungsgemäße Verbindungen (IIa), bei denen c größer oder gleich 1 ist.

Für die Anwendung der erfindungsgemäßen Materialien in den bereits o. g. und auch unten noch erläuterten elektronischen Bauelementen, kann es nun vorteilhaft sein, diese in weitere Materialien einzumischen.
Besonders bevorzugt ist hierbei das Einmischen in polymere Verbindungen. Deshalb ist ein weiterer Bestandteil der vorliegenden Erfindung Mischungen von einer oder mehrerer Verbindungen der Formel (IIa) gemäß Anspruch 1 mit nicht konjugierten, teilkonjugierten oder konjugierten Polymeren.

Beispiele für diese Polymere, die sich zum Mischen eignen, sind solche aus der Gruppe der Polyfluorene, Poly-spirobifluorene, Poly-para-phenylene, Poly-paraphenylenevinylene, Poly-carbazole, Poly-vinylcarbazole, Polythiophene oder auch aus Copolymeren, die mehrere der hier genannten Einheiten aufweisen.

Da die Beschichtung bevorzugt aus Lösung geschieht, ist es bevorzugt, daß die entsprechenden Polymere in organischen Lösemitteln löslich sind.

Es ist auch möglich, die erfindungsgemäßen Materialien mit nicht-polymeren Materialien zu mischen. Des weiteren kann es noch Vorteile bringen, Mehrkomponenten-Mischungen, enthaltend erfindungsgemäße Materialien, Polymere und weitere niedermolekulare Materialien zu verwenden.

Eine weitere Möglichkeit besteht auch darin, die so erhaltenen erfindungsgemäßen Verbindungen nun als Co-Monomere in konjugierte oder auch teilkonjugierte Polymere mit ein-zu-polymerisieren. So können sie u. a. in lösliche Polyfluorene (z. B. gemäß EP-A-842208 oder WO 00/22026), Poly-spirobifluorene (z. B. gemäß EP-A- 707020), Poly-para-phenylene (z. B. gemäß WO 92/18552), Poly-carbazole, Polythiophene (z. B. gemäß EP-A-1028136) oder auch Copolymere die mehrere der hier genannten Einheiten aufweisen, durch Polymerisation inkorporiert werden.

Diese Polymere finden Verwendung als aktive Komponenten in elektronischen Bauteilen, wie z. B. Organischen Leuchtdioden (OLEDs), Organischen Integrierten Schaltungen (O-ICs), Organischen Feld-Effekt-Transistoren (OFETs), Organischen Dünnfilmtransistoren (OTFTs), Organischen Solarzellen (O-SCs) oder auch Organische Laserdioden (O-Laser).

## Patentansprüche

1. Verbindung der Formel (IIa), 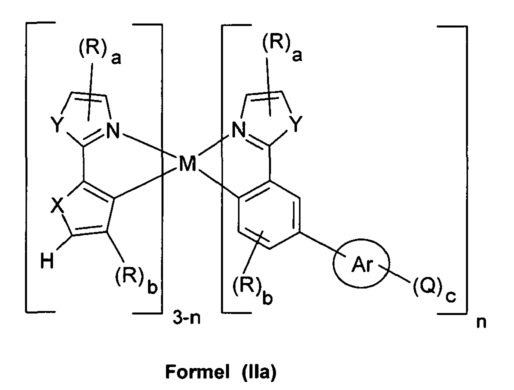 wobei die Symbole und Indizes folgende Bedeutung haben:
M ist Rh oder Ir;
X ist O, S oder Se;
Y ist S, O, R-C=C-Roder R-C=N;
R ist gleich oder verschieden bei jedem Auftreten H, F, Cl, NO₂, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -S-, -NR¹-, oder -CONR²- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann; wobei mehrere Substituenten R, sowohl am selben Ring als auch an den beiden unterschiedlichen Ringen zusammen wiederum ein weiteres mono- oder polycyclisches Ringsystem aufspannen können;
Ar ist eine Arylgruppe mit bis zu 40 C-Atomen oder Heteroarylgruppe mit 1 bis 40 C-Atomen;
Q ist gleich oder verschieden bei jedem Auftreten und steht für F, Cl, Br, I, CN, COOH, NH₂, OH, SH, NO₂, SO₃H, SiR₃ oder eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -S-, -CO-, -COO-, -O-CO-, -NR¹-, -(NR²R³)⁺A⁻, oder -CONR⁴-ersetzt sein können und wobei ein oder mehrere H-Atome durch F ersetzt sein können, oder eine Aryl- oder Heteroarylgruppe mit 4 bis 14 C-Atome, die durch einen oder mehrere, nicht aromatische Reste R substituiert sein kann;
A⁻ ist ein einfach geladenes Anion oder dessen Äquivalent;
R¹,R²,R³,R⁴ sind gleich oder verschieden, H oder ein aliphatischer oder aromatischer Kohlenwasserstoffrest mit 1 bis 20 C-Atomen;
a ist 0, 1 oder 2,
b ist 0, 1, 2 oder 3, bevorzugt 0 oder 1;
c ist 0 bis 15, bevorzugt 0, 1, 2, 3, 4 oder 5, besonders bevorzugt 0, 1 oder 2;
n ist 1 oder 2.

2. Verbindung gemäß Anspruch 1, **dadurch gekennzeichnet, dass** das Symbol Y O oder S bedeutet.

3. Verbindung gemäß Anspruch 1 oder 2, **dadurch gekennzeichnet, daß** Y für R-C=C-R oder R-C=N- steht.

4. Verbindung gemäß einem oder mehreren der Ansprüche 1 bis 3, **dadurch gekennzeichnet, daß** b = 0 gilt

5. Verbindung gemäß einem oder mehreren der Ansprüche 1 bis 4, **dadurch gekennzeichnet, daß** Ar für eine Arylgruppe steht.

6. Verbindung gemäß einem oder mehreren der Ansprüche 1 bis 4, **dadurch gekennzeichnet, daß** Ar für eine Heteroarylgruppe steht.

7. Verbindung gemäß Anspruch 5 oder 6, **dadurch gekennzeichnet, daß** der Rest Ar für Benzol, Toluol, Xylol, Fluorbenzol, Difluorbenzol, Biphenyl, 1,2- bzw. 1,3- bzw. 1,4-Terphenyl, Tetraphenyl, Naphthyl, Fluoren, Phenanthren, Anthracen, 1,3,5-Triphenylbenzol, Pyren, Perylen, Chrysen, Triptycen, [2.2]Paracyclopnan, Pyridin, Pyridazin, 4,5-Benzo-pyridazin, Pyrimidin, Pyrazin, 1,3,5-Triazin, Pyrrol, Indol, 1,2,5- bzw. 1,3,4-Oxadiazol, 2,2'- bzw. 4,4'-Diazabiphenyl, Chinolin, Carbazol, 5,10H-Dihydro-phenazin, 10H-Phenoxazin, Phenothiazin, Xanthen, 9-Acridin, Furan, Benzofuran, Thiophen oder Benzothiophen steht.

8. Verbindung gemäß Anspruch 5 oder 6, **dadurch gekennzeichnet, daß** Ar für Carbazol, N-Alkylcarbazol, N-Alkyl-phenoxazine, Phenothiazin, Xanthen, Phenyl, 1-bzw. 2-Naphthyl oder 1-, 2- bzw. 9-Anthracenyl steht.

9. Verbindung gemäß einem oder mehreren der Ansprüche 1 bis 8, **dadurch gekennzeichnet, daß** für Q = F, Cl, Br, CN, NO₂ SiR₃ oder eine geradkettige oder verzweigte oder cyclische Alkyl- oder Alkoxygruppe mit 1 bis 6 C-Atomen, wobei eine oder mehrere benachbarte CH₂-Guppe durch -CF₂- ersetzt sein kann, gilt.

10. Verbindung gemäß einem oder mehreren der Ansprüche 1 bis 9, **dadurch gekennzeichnet, daß** M= Ir gilt.

11. Verbindung gemäß einem oder mehreren der Ansprüche 1 bis 10, **dadurch gekennzeichnet, daß** c größer oder gleich 1 ist.

12. Mischung von einer oder mehrerer Verbindungen gemäß Anspruch 1 mit nicht konjugierten, teilkonjugierten oder konjugierten Polymeren.

13. Mischung gemäß Anspruch 12, **dadurch gekennzeichnet, daß** das Polymer aus der Gruppe Polyfluorene, Poly-spirobifluorene, Poly-para-phenylene, Poly-carbazole, Poly-vinylcarbazole, Polythiophene oder auch aus Copolymeren, die mehrere der hier genannten Einheiten aufweisen, ausgewählt ist.

14. Verwendung der Verbindung gemäß Anspruch 1 oder einer Mischung gemäß Anspruch 12 oder 13 in organischen Elektrolumineszenz- und/oder Phosphoreszenz-Vorrichtungen, insbesondere als Emissions-Schicht (EML), oder in Solarzellen, in photovoltaischen Vorrichtungen, wie organischen Photodetektoren oder organischen Solarzellen, als in organischen ICs (organischen integrierten Schaltungen), in organischen Feld-Effekt-Transistoren (OTFT), in organischen Dünnschichtransitoren und in organischen-Feststofflasern.

15. Elektronisches Bauteil enthaltend eine Verbindung gemäß Anspruch 1 oder eine Mischung gemäß Anspruch 12 oder 13.

## Claims

1. Compound of the formula (IIa), 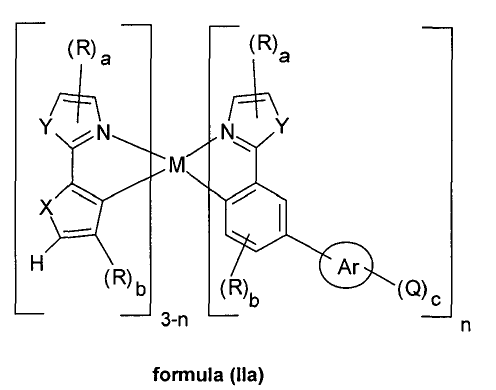 where the symbols and indices have the following meanings:
M is Rh or Ir;
X is O, S or Se;
Y is S, O, R-C=C-R or R-C=N;
R is, identically or differently on each occurrence, H, F, Cl, NO₂, CN, a straight-chain or branched or cyclic alkyl or alkoxy group having 1 to 20 C atoms, where one or more non-adjacent CH₂ groups may be replaced by -O-, -S-, -NR¹- or -CONR²- and where one or more H atoms may be replaced by F, or an aryl or heteroaryl group having 4 to 14 C atoms, which may be substituted by one or more non-aromatic radicals R; where a plurality of substituents R, both on the same ring and also on the two different rings, together may in turn form a further mono- or polycyclic ring system;
Ar is an aryl group having up to 40 C atoms or heteroaryl group having 1 to 40 C atoms;
Q is identical or different on each occurrence and stands for F, Cl, Br, I, CN, COOH, NH₂, OH, SH, NO₂, SO₃H, SiR₃ or a straight-chain or branched or cyclic alkyl or alkoxy group having 1 to 20 C atoms, where one or more non-adjacent CH₂ groups may be replaced by -O-, -S-, -CO-, -COO-, -O-CO-, -NR¹-, -(NR²R³)⁺A⁻ or -CONR⁴- and where one or more H atoms may be replaced by F, or an aryl or heteroaryl group having 4 to 14 C atoms, which may be substituted by one or more non-aromatic radicals R;
A⁻ is a singly charged anion or an equivalent thereof;
R¹,R²,R³,R⁴ are, identically or differently, H or an aliphatic or aromatic hydrocarbon radical having 1 to 20 C atoms;
a is 0, 1 or 2,
b is 0, 1, 2 or 3, preferably 0 or 1;
c is 0 to 15, preferably 0, 1, 2, 3, 4 or 5, particularly preferably 0, 1 or 2;
n is 1 or 2.

2. Compound according to Claim 1, **characterised in that** the symbol Y denotes O or S.

3. Compound according to Claim 1 or 2, **characterised in that** Y stands for R-C=C-R or R-C=N-.

4. Compound according to one or more of Claims 1 to 3, **characterised in that** b = 0.

5. Compound according to one or more of Claims 1 to 4, **characterised in that** Ar stands for an aryl group.

6. Compound according to one or more of Claims 1 to 4, **characterised in that** Ar stands for a heteroaryl group.

7. Compound according to Claim 5 or 6, **characterised in that** the radical Ar stands for benzene, toluene, xylene, fluorobenzene, difluorobenzene, biphenyl, 1,2- or 1,3- or 1,4-terphenyl, tetraphenyl, naphthyl, fluorene, phenanthrene, anthracene, 1,3,5-triphenylbenzene, pyrene, perylene, chrysene, triptycene, [2,2]paracyclophane, pyridine, pyridazine, 4,5-benzopyridazine, pyrimidine, pyrazine, 1,3,5-triazine, pyrrole, indole, 1,2,5- or 1,3,4-oxadiazole, 2,2'- or 4,4'-diazabiphenyl, quinoline, carbazole, 5,10H-dihydrophenazine, 10H-phenoxazine, phenothiazine, xanthene, 9-acridine, furan, benzofuran, thiophene or benzothiophene.

8. Compound according to Claim 5 or 6, **characterised in that** Ar stands for carbazole, N-alkylcarbazole, N-alkylphenoxazine, phenothiazine, xanthene, phenyl, 1- or 2-naphthyl or 1-, 2- or 9-anthracenyl.

9. Compound according to one or more of Claims 1 to 8, **characterised in that** Q = F, Cl, Br, CN, NO₂, SiR₃ or a straight-chain or branched or cyclic alkyl or alkoxy group having 1 to 6 C atoms, where one or more adjacent CH₂ groups may be replaced by -CF₂-.

10. Compound according to one or more of Claims 1 to 9, **characterised in that** M = Ir.

11. Compound according to one or more of Claims 1 to 10, **characterised in that** c is greater than or equal to 1.

12. Mixture of one or more compounds according to Claim 1 with non-conjugated, partially conjugated or conjugated polymers.

13. Mixture according to Claim 12, **characterised in that** the polymer is selected from the group polyfluorenes, polyspirobifluorenes, poly-para-phenylenes, polycarbazoles, polyvinylcarbazoles, polythiophenes or also from copolymers which contain a plurality of the units mentioned here.

14. Use of the compound according to Claim 1 or a mixture according to Claim 12 or 13 in organic electroluminescent and/or phosphorescent devices, in particular as emission layer (EML), or in solar cells, in photovoltaic devices, such as organic photodetectors or organic solar cells, and in organic ICs (organic integrated circuits), in organic field-effect transistors (OTFTs), in organic thin-film transistors and in organic solid-state lasers.

15. Electronic component comprising a compound according to Claim 1 or a mixture according to Claim 12 or 13.

## Revendications

1. Composé de la formule (IIa), 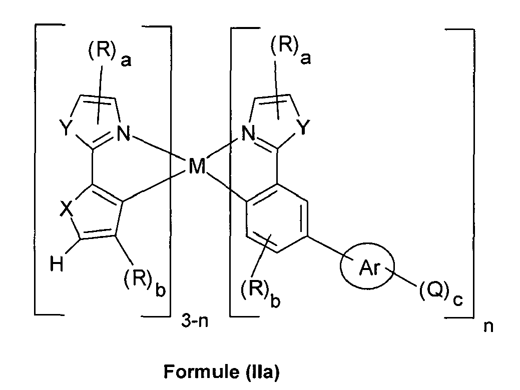 dans laquelle les symboles et indices ont les significations suivantes :
M est Rh ou Ir;
X est O, S ou Se;
Y est S, O, R-C=C-R ou R-C=N;
R est, de façon identique ou différente à chaque occurrence, H, F, CI, NO₂, CN, un groupe alkyle ou alcoxy en chaî ne droite, ramifié ou cyclique ayant 1 à 20 atomes de C, où un ou plusieurs groupes CH₂ non adjacents peuvent être remplacés par -O-, -S-, -NR¹- ou -CONR²- et où un ou plusieurs atomes de H peuvent être remplacés par F, ou un groupe aryle ou hétéroaryle ayant 4 à 14 atomes de C, lequel peut être substitué par un ou plusieurs radicaux non aromatiques R ; où une pluralité de substituants R, à la fois sur le même cycle et sur les deux cycles différents, peuvent ensemble à leur tour former un autre système de cycle mono- ou polycyclique;
Ar est un groupe aryle ayant jusqu'à 40 atomes de C ou un groupe hétéroaryle ayant 1 à 40 atomes de C;
Q est identique ou différent à chaque occurrence et représente F, CI, Br, I, CN, COOH, NH₂, OH, SH, NO₂, SO₃H, SiR₃ ou un groupe alkyle ou alcoxy en chaî ne droite, ramifié ou cyclique ayant 1 à 20 atomes de C, où un ou plusieurs groupes CH₂ non adjacents peuvent être remplacés par -O-, -S-, -CO-, -COO-, -O-CO-, -NR¹-, -(NR²R³)⁺A⁻ ou -CONR⁴- et où un ou plusieurs atomes de H peuvent être remplacés par F, ou un groupe aryle ou hétéroaryle ayant 4 à 14 atomes de C, lequel peut être substitué par un ou plusieurs radicaux non aromatiques R;
A⁻ est un anion à charge unique ou un équivalent ;
R¹,R²,R³,R⁴ sont, de façon identique ou différente, H ou un radical hydrocarbone aliphatique ou aromatique ayant 1 à 20 atomes de C;
a est 0, 1 ou 2,
b est 0, 1, 2 ou 3, de préférence 0 ou 1;
c est 0 à 15, de préférence 0, 1, 2, 3, 4 ou 5, de façon particulièrement préférable 0, 1 ou 2;
n est 1 ou 2.

2. Composé selon la revendication 1, **caractérisé en ce que** le symbole Y représente O ou S.

3. Composé selon la revendication 1 ou 2, **caractérisé en ce que** Y représente R-C=C-R ou R-C=N-.

4. Composé selon une ou plusieurs des revendications 1 à 3, **caractérisé en ce que** b=0.

5. Composé selon une ou plusieurs des revendications 1 à 4, **caractérisé en ce que** Ar représente un groupe aryle.

6. Composé selon une ou plusieurs des revendications 1 à 4, **caractérisé en ce que** Ar représente un groupe hétéroaryle.

7. Composé selon la revendication 5 ou 6, **caractérisé en ce que** le radical Ar représente benzène, toluène, xylène, fluorobenzène, difluorobenzène, biphényle, 1,2- ou 1,3- ou 1,4-terphényle, tétraphényle, naphtyle, fluorène, phénanthrène, anthracène, 1,3,5-triphénylbenzène, pyrène, perylène, chrysène, triptycène, [2,2]paracyclophane, pyridine, pyridazine, 4,5-benzopyridazine, pyrimidine, pyrazine, 1,3,5-triazine, pyrrole, indole, 1,2,5- ou 1,3,4-oxadiazole, 2,2' - ou 4,4' -diazabiphenyle, quinoline, carbazole, 5,10H-dihydrophénazine, 10H-phénoxazine, phénothiazine, xanthène, 9-acridine, furan, benzofuran, thiophène ou benzothiophène.

8. Composé selon la revendication 5 ou 6, **caractérisé en ce que** Ar représente carbazole, N-alkylcarbazole, N-alkylphénoxazine, phénothiazine, xanthène, phényle, 1- ou 2-naphtyle ou 1-, 2- ou 9-anthracényle.

9. Composé selon une ou plusieurs des revendications 1 à 8, **caractérisé en ce que** Q = F, CI, Br, CN, NO₂, SiR₃ ou un groupe alkyle ou alcoxy en chaî ne droite, ramifié ou cyclique ayant 1 to 6 atomes de C, où un ou plusieurs groupes CH₂ non adjacents peuvent être remplacés par -CF₂-.

10. Composé selon une ou plusieurs des revendications 1 à 9, **caractérisé en ce que** M = Ir.

11. Composé selon une ou plusieurs des revendications 1 à 10, **caractérisé en ce que** c est supérieur ou égal à 1.

12. Mélange de un ou plusieurs composés selon la revendication 1 avec des polymères non-conjugués, partiellement conjugués ou conjugués.

13. Mélange selon la revendication 12, **caractérisé en ce que** le polymère est choisi parmi le groupe des polyfluorènes, polyspirobifluorènes, poly-para-phénylènes, polycarbazoles, polyvinylcarbazoles, polythiophènes ou également parmi des copolymères qui contiennent une pluralité des unités mentionnées ici.

14. Utilisation du composé selon la revendication 1 ou d'un mélange selon la revendication 12 ou 13 dans des dispositifs électroluminescents et/ou phosphorescents organiques, en particulier comme couche d'émission (EML), ou dans des cellules solaires, dans des dispositifs photovoltaï ques, tels que des photodétecteurs organiques ou des cellules solaires organiques, dans des IC organiques (circuits intégrés organiques), dans des transistors à effet de champ organiques (OTFT), dans des transistors à films minces organiques et dans des lasers à l'état solide organiques.

15. Composant électronique comprenant un composé selon la revendication 1 ou un mélange selon la revendication 12 ou 13.
